# FASCICULE DE BREVET EUROPEEN

(11) **EP 0 425 384 B1**
(45) Date de publication et mention de la délivrance du brevet: **22.09.1993**
(21) Numéro de dépôt: 90403013.7
(22) Date de dépôt: 25.10.1990
(51) Int. Cl.: F02K 9/68, F02K 9/56

(54) **Méthode et dispositif pour protéger de la dégradation un lit catalytique de propulseur parcouru par un caburant**
Verfahren und Vorrichtung zur Erhaltung der Wirksamkeit eines katalytischen Bettes in einem Triebwerk
Method and device to protect the catalytic bed of a thruster from degradation

(30) Priorité: 27.10.1989 FR 8914146
(43) Date de publication de la demande: 02.05.1991
(73) Titulaire: CENTRE NATIONAL D'ETUDES SPATIALES, 75001 Paris (FR)
(72) Inventeur: Runavot, Jean Jacques, Auzeville, F-31320 Castanet (FR)
(74) Mandataire: Mongrédien, André

(56) Documents cités:
- FR-A- 2 399 868
- FR-A- 2 455 184
- US-A- 3 373 769
- ZEITSCHRIFT FUR FLUGWISSENSCHAFTEN. vol. 6, no. 4, août 1982, BRAUNSCHWEIG DE
- Schmitz: "Hydrazin-Gasgeneratortechnologie für Raumfahrtantriebe."
- PATENT ABSTRACTS OF JAPAN vol. 7, no. 193 (M-238)(1338) 24 août 1983,& JP-A-58 92729 (TOKYO SHIBAURA DENKI K.K.) 02 juin 1983,

## Description

L'invention concerne une méthode pour protéger de la dégradation un lit catalytique de propulseur parcouru par un carburant, ainsi qu'un dispositif correspondant.

Dans certains propulseurs tels que ceux utilisés pour les véhicules spatiaux, on utilise des carburants que l'on fait passer par un lit catalytique pour les décomposer suivant une réaction exothermique. Les gaz de décomposition passent ensuite par une tuyère et sont à l'origine de la poussée du propulseur. Le lit catalytique utilisé est normalement de l'iridium déposé sur des grains poreux d'alumine lorsque le carburant est de l'hydrazine. Un tel propulseur est connu du document "Zeitschrift für Flugwissenschaften und Weltraumforschung", vol. 6, no. 4 août 1982, Braunchweig DE, pages 219-224, Breves & Schmitz : "Hydrazin-Gasgenerator-technologie für Raumfahrtantriebe".

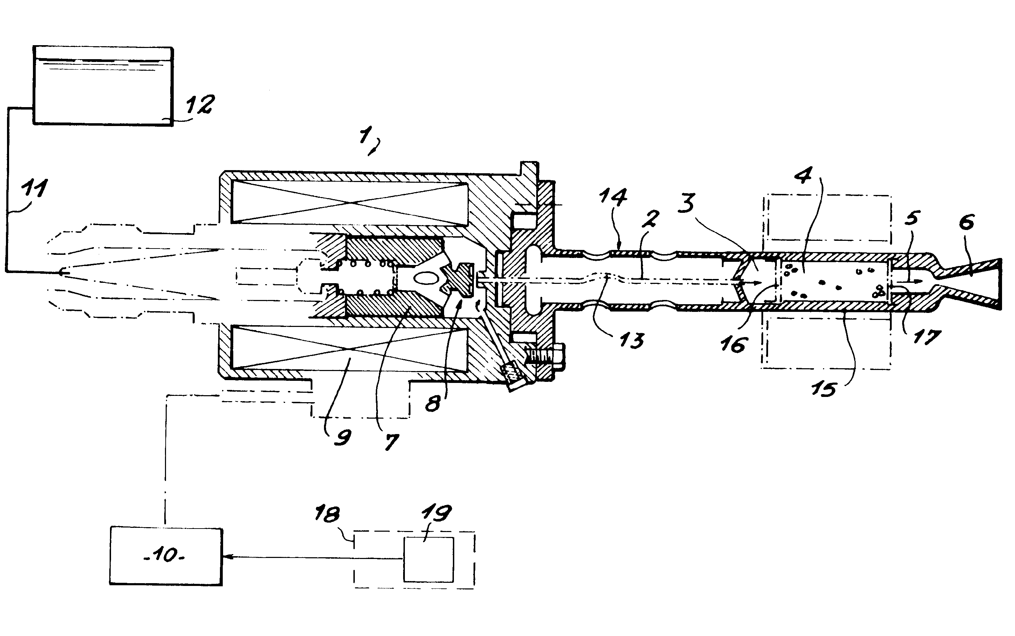

La figure montre qu'un tel propulseur peut comprendre de l'amont vers l'aval une électrovanne bistable 1, au moins un capillaire d'injection 2, une chambre d'injection 3, le lit catalytique 4, une chambre d'expansion 5 et une tuyère 6.

L'électrovanne 1 comprend, disposés dans une armature, un noyau 7 muni d'une tête 8 pouvant venir se plaquer sur l'entrée du capillaire 2, ainsi qu'une bobine 9 d'induction commandée par un système de pilotage 10 qui fournit la tension d'excitation. Par ailleurs, l'électrovanne 1 est munie d'un conduit d'alimentation 11 qui communique avec un réservoir d'hydrazine 12 et permet à l'hydrazine d'arriver au capillaire d'injection 2, s'il n'st pas obstrué par la tête 8, en passant par l'intérieur du noyau 7.

Le capillaire d'injection 2 est ici représenté avec une partie recourbée 13 pour éviter les coups de bélier de l'hydrazine liquide, et il est entouré et maintenu par une armature 14 reliée rigidement à l'électrovanne 1 et à la chambre d'injection 3 et qui consiste essentiellement en un tube perforé faisant office de radiateur.

Le lit catalytique est contenu dans un tube et comprimé longitudinalement entre deux grilles d'entrée 16 et de sortie 17 donnant respectivement sur la chambre d'injection 3 et sur la chambre d'expansion 5.

En fonctionnement continu normal, l'hydrazine est pulvérisée dans la chambre d'injection 3 et les gouttelettes frappent la grille d'entrée 15. Il ne sort de la grille de sortie 17 que des gaz ne comprenant plus de vapeurs d'hydrazine. La température du lit catalytique 4 atteint 1 000°C environ et la température est nettement plus faible à l'entrée de la chambre d'injection 3, de façon à éviter la vaporisation de l'hydrazine à ce niveau. Le radiateur 14 et un débit d'hydrazine froide suffisant permettent d'y parvenir. Des phénomènes transitoires thermiques et hydrauliques apparaissent par contre, notamment dans la chambre d'injection 3, en fonctionnement pulsé de l'électrovanne 1. L'importance de ces phénomènes transitoires dépend de la conception du propulseur.

On constate que l'efficacité du lit catalytique 4 diminue en pratique assez rapidement. Au bout de quelques mois, dans des conditions normales de service, on a constaté des pertes de rendement atteignant jusqu'à 20 ou 30 %, ce qui est indésirable pour des satellites dont la durée de vie normale est de plusieurs années.

Parmi les causes de ce phénomène, on citera pour mémoire la fragmentation progressive des grains du catalyseur ou du dépôt d'iridium par suite notamment du nombre de phénomènes transitoires et d'allumages du propulseur. Une autre cause importante, que l'on cherche à combattre avec l'invention, est liée à certaines substances dissoutes non volatiles contenues dans l'hydrazine et qui empoisonnent le catalyseur. Ces impuretés sont à très faible concentration dans l'hydrazine utilisée pour des véhicules spatiaux, mais il est impossible de les éliminer totalement. Les principales sont le fer présent dans l'électrovanne 1 ou le réservoir 12 ainsi que la silice présente sous forme de silane dans la membrane en élastomère qui, dans les réservoirs d'un grand nombre de véhicules spatiaux, sépare l'hydrazine du gaz de pressurisation. L'hydrazine se charge de ces impuretés en corrodant les surfaces qu'elle baigne.

Lors du transit dans le propulseur et de l'évaporation de l'hydrazine sur les surfaces les plus chaudes, les impuretés se déposent à l'état pâteux puis solide, créant une gangue plus ou moins solidement accrochée aux surfaces en fonction de la température et des phénomènes physico-chimiques mis en jeu. Ces changements d'état semblent irréversibles dans une large mesure.

Pendant les fonctionnements continus stables (plusieurs dizaines de minutes) nécessaires pour les corrections d'inclinaison des satellites géostationnaires, le dépôt se fait avant tout sur les grains du lit catalytique 4. Pendant les fonctionnements pulsés, surtout si le propulseur n'est pas très stable, le dépôt se produit plutôt dans la chambre d'injection 3 et à la sortie du capillaire 2, qui peut ainsi être bouché. En effet, la chambre d'injection 3 ne bénéficie pas alors intégralement du refroidissement produit par l'hydrazine d'alimentation et s'échauffe donc par rapport au fonctionnement continu, si bien que l'hydrazine est vaporisée prématurément.

Quelques dizaines de milligrammes d'impuretés peuvent rendre des propulseurs de faible poussée, de l'ordre du newton, à peu près inutilisables.

La méthode proposée permet d'éviter l'empoisonnement des grains catalytiques par les impuretés.

Le mode de fonctionnement continu est remplacé pour ce la par un mode de fonctionnement pseudo-continu dans lequel on crée de brèves interruptions périodiques de l'alimentation du carburant.

Le phénomène principal qui apparaît est une variation de pression dans la chambre d'injection 3 et dans le lit catalytique 4 : la pression chute dès que l'alimentation est interrompue et s'accroît à nouveau jusqu'à la valeur nominale du fonctionnement continu dès que l'alimentation reprend. Ces oscillations de pression, que l'on peut assimiler à de petites explosions à l'entrée du lit catalytique 4, expulsent hors de celui-ci les impuretés, qui se trouvent alors à l'état pâteux à cause de la température élevée dans le lit catalytique 4 : les brèves interruptions de l'alimentation ne font pas varier sensiblement cette température. Les impuretés sont évacuées par la tuyère 6. De plus, de brèves interruptions de l'alimentation ne suffisent pas à réchauffer sensiblement la chambre d'injection 3 et la sortie du capillaire d'injection 2, si bien qu'on évite de reporter l'encrassement sur ces parties.

Des essais menés avec un tel procédé permettent de maintenir l'efficacité du propulseur, et même éventuellement de le régénérer après un début d'encrassement, alors qu'une gangue a pu se solidifier autour des grains de catalyseur par suite de périodes d'inutilisation du propulseur.

Le système de pilotage 10 de l'électrovanne 1 ne nécessite que de petites transformations pour être adapté à cette méthode. Il suffit d'ajouter un microprocesseur 18 muni d'une horloge 19 qui interrompt à intervalles réguliers l'excitation de la bobine 9 pour une durée déterminée. Le microprocesseur 18 peut être choisi parmi de nombreux matériels connus et sa programmation est facile pour le spécialiste. On a utilisé le microprocesseur ARRIS 6100 dans une réalisation concrète. D'autres systèmes, comportant par exemple une bascule ou un interrupteur commandé par un générateur de signal rectangulaire, pourraient aussi être envisagés.

Bien qu'il existe de nombreuses solutions satisfaisantes de mise en oeuvre de l'invention, on peut dégager quelques règles. Les interruptions peuvent ainsi être commandées pour des cycles de fonctionnement plus longs qu'une minute ou que quelques minutes. Les interruptions périodiques peuvent intervenir toutes les dix secondes environ, bien qu'il n'existe pas de limite nette et que les interruptions ne soient pas forcément à intervalles réguliers. Les intervalles de sept à quinze secondes environ devraient donner des résultats peu différents.

La durée des interruptions a une importance plus grande que leur intervalle, car on conçoit que la pression ne varie pas sensiblement si ces interruptions sont trop brèves. Si par contre les interruptions sont trop longues, la chute de pression est séparée de la remontée de pression par un laps de temps pendant lequel la pression de carburant vaporisé est nulle, et on peut même retrouver les inconvénients du mode pulsé. Dans les deux cas, la violence des oscillations et l'efficacité de l'expulsion des impuretés sont réduites. Une bonne solution consiste donc à régler la durée de l'interruption de façon que la pression chute de la valeur nominale correspondant à une alimentation continue à zéro puis remonte immédiatement jusqu'à la valeur nominale. Cette durée est de quelques centaines de millisecondes. Dans le cas particulier d'un propulseur d'un demi-newton de poussée, une durée suffisante d'interruption est de 0,38 à 0,5 ou 0,6 seconde.

Ces différentes valeurs sont bien entendu à adapter et modifier pour chaque cas particulier. De même, d'autres types de carburants et de catalyseurs pourraient être utilisés.

## Revendications

1. Méthode pour protéger de la dégradation un lit catalytique (4) de propulseur parcouru par un carburant décomposé dans ledit lit, caractérisée en ce qu'elle consiste, au cours d'un cycle de fonctionnement du propulseur, à créer de brèves interruptions périodiques de l'alimentation du carburant.

2. Méthode selon la revendication 1, caractérisée en ce que le cycle de fonctionnement a une durée supérieure à une minute.

3. Méthode selon l'une quelconque des revendications 1 ou 2, caractérisée en ce que les interruptions sont inférieures à une seconde.

4. Méthode selon la revendication 3, caractérisée en ce que les interruptions sont suffisamment brèves pour que la pression dans le lit catalytique qui résulte de la décomposition du carburant connaisse une phase de chute suivie immédiatement après par une phase de remontée.

5. Dispositif pour protéger de la dégradation un lit catalytique de propulseur parcouru par un carburant décomposé dans ledit lit, comprenant un dispositif à vanne (1) d'alimentation en carburant, caractérisé en ce qu'il comprend des moyens de commande de la vanne permettant la mise en oeuvre de la méthode selon l'une quelconque des revendications précédentes.

6. Dispositif selon la revendication 5, caractérisé en ce que le carburant est de l'hydrazine et le lit catalytique est constitué de grains recouverts d'iridium.

## Patentansprüche

1. Verfahren zur Erhaltung der Wirksamkeit eines katalytischen Bettes (4) eines Triebwerks, durchströmt von einem in besagtem Bett zersetzten Treibstoff, dadurch gekennzeichnet, daß es, im Verlauf eines Funktions-Zyklus des Triebwerks, kurze periodische Unterbrechungen der Treibstoffzufuhr verursacht.

2. Verfahren nach Anspruch 1, dadurch gekennzeichnet, daß der Funktions-Zyklus eine Dauer größer einer Minute hat.

3. Verfahren nach irgend einem der Ansprüche 1 oder 2, dadurch gekennzeichnet, daß die Unterbrechungen kleiner einer Sekunde sind.

4. Verfahren nach Anspruch 3, dadurch gekennzeichnet, daß die Unterbrechungen kurz genug sind, damit der Druck in dem katalytischen Bett, welcher aus der Zersetzung des Treibstoffes resultiert, eine Phase des Absinkens, unmittelbar gefolgt von einer Phase des Ansteigens, hat.

5. Vorrichtung zur Erhaltung der Wirksamkeit eines katalytischen Bettes eines Triebwerks, durchströmt von einem in besagtem Bett zersetzten Treibstoff, umfassend eine Ventil-Vorrichtung der Treibstoffzufuhr, dadurch gekennzeichnet, daß sie Vorrichtungen zur Steuerung des Ventils umfaßt, welche die Durchführung des Verfahrens nach irgend einem der vorstehenden Ansprüche erlaubt.

6. Vorrichtung nach Anspruch 5, dadurch gekennzeichnet, daß der Treibstoff Hydrazin ist, und das katalytische Bett aus Iridium überzogenen Körnern besteht.

## Claims

1. Method for protecting against degradation a catalytic bed (4) of an engine traversed by a fuel decomposed in said bed, characterized in that it comprises, during an engine operating cycle, creating brief periodic interruptions of the fuel supply.

2. Method according to claim 1, characterized in that the operating cycle lasts more than one minute.

3. Method according to either of the claims 1 or 2, characterized in that the interruptions are shorter than one second.

4. Method according to claim 3, characterized in that the interruptions are sufficiently brief for the pressure in the catalytic bed resulting from the decomposition of the fuel to undergo a drop phase, immediately followed by a rise phase.

5. Device for protecting against degradation a catalytic bed of an engine traversed by a fuel decomposed in said bed, incorporating a fuel supply valve mechanism (1), characterized in that it comprises means for controlling the valve making it possible to implement the method according to any one of the preceding claims.

6. Device according to claim 5, characterized in that the fuel is hydrazine and the catalytic bed is constituted by grains covered with iridium.
